# EUROPÄISCHE PATENTANMELDUNG

(11) **EP 1 481 743 A2**
(43) Veröffentlichungstag der Anmeldung: **01.12.2004**
(21) Anmeldenummer: 04012232.7
(22) Anmeldetag: 24.05.2004
(51) Int. Cl.: B21C 37/18, B21C 37/15, B21C 37/08, B21D 5/01, B62D 21/15

(54) **Blechelemente aus flexibel gewalztem Bandmaterial**

(30) Priorität: 22.05.2003 DE 10323693
(71) Anmelder: Muhr und Bender KG, 57439 Attendorn (DE)
(72) Erfinder: Hauger, Andreas, Dr.-Ing., 57439 Attendorn (DE)
(74) Vertreter: Neumann, Ernst Dieter, Dipl.-Ing.

(57) **Zusammenfassung**

Blechelement, das aus flexibel gewalztem Bandmaterial mit in Bandlängsrichtung unterschiedlichen Dicken um die Bandlängsrichtung zu einem Rohr- oder Profilkörper mit unrundem Querschnitt und über der Länge variabler Wandstärke umgeformt ist.

## Beschreibung

Die Erfindung betrifft Blechelemente, die aus flexibel gewalztem Bandmaterial mit in Bandlängsrichtung unterschiedlichen Dicken hergestellt sind. Sogenanntes flexibel gewalztes Bandmaterial wird durch Walzen von Ausgangsmaterial mit zunächst konstanter Dicke mit variabler Walzspaltdicke hergestellt. Solche Walzverfahren zum Herstellen flexibel gewalzten Bandmaterials sowie Umformverfahren zur Herstellung von Blechelementen daraus sind im Stand der Technik bekannt.

In der DE-PS 104 875 ist beschrieben, wie ein streifen- oder tafelförmiges Blechstück durch partielles Auswalzen auf unterschiedliche Wanddicken gebracht wird, aus dem so erhaltenen Blechstück mit variablen Wanddicken ein Rohr mit in Längsrichtung unterschiedlicher Wanddicke rundgebogen und längs des Schlitzes verlötet wird.

Schließlich ist es aus der EP 0 788 849 A1 bekannt, ein Metallblech zunächst so zu walzen, daß parallele Vertiefungen quer zur Walzrichtung gebildet werden, wobei das gewalzte Metallblech anschließend zugeschnitten und die Blechstücke durch Umformung des gewalzten Metallbleches und Fügen der Stoßkanten zu Rohren mit in Längsrichtung variabler Wandstärke fertiggestellt werden.

Blechelemente von gleichmäßigem Querschnitt oder in einer Längsrichtung veränderlichem Querschnitt können in ihrer bestimmungsgemäßen Verwendung in unterschiedlichen Längs- oder Umfangsabschnitten unterschiedlichen Belastungen ausgesetzt sein. Bei Herstellung der Blechelemente aus Material gleichmäßiger Wandstärke sind somit die geringer belastete Bereiche überdimensioniert und führen zu übermäßigem Gewicht des Bauteils. Dies ist insbesondere im Fahrzeugbau unerwünscht.

Es ist weiterhin bekannt, daß im Fahrzeugbau von Blechelementen bei Überschreiten ihrer Festigkeitsgrenze, also im Fall eines Fahrzeugcrashs, ein definiertes Verformungsverhalten gefordert wird. Ein solches Verformungsverhalten kann durch die Formgebung der Blechelemente und/oder durch Verwendung von Blechelementen mit über der Länge oder über dem Umfang veränderlicher Wandstärke herbeigeführt werden.

Der vorliegenden Erfindung liegt die Aufgabe zugrunde, Blechelemente aus flexibel gewalztem Bandmaterial bereitzustellen, die einen erweiterten Einsatz solcher Blechelemente im Fahrzeugbau, insbesondere als Chassis- und Fahrwerkskomponenten sowie als Karosserieteile, ermöglichen.

Soweit hier von flexibel gewalztem Bandmaterial die Rede ist, ist sowohl die Möglichkeit eingeschlossen, das nach dem Walzen ungeteilte Bandmaterial zu Blechelementen umzuformen und anschließend abzulängen oder auch das Bandmaterial nach dem flexiblen Walzen abzulängen und danach zu Blechelementen umzuformen oder schließlich das Bandmaterial vor dem flexiblen Walzen abzulängen und einzelne flexibel gewalzte Platinen zu Blechelementen umzuformen.

Vorzugweise handelt es sich bei den im folgenden beschriebenen Blechelementen um aus kaltgewalztem Bandmaterial hergestellte Blechelemente.

Eine erste erfindungsgemäße Lösung besteht in einem Blechelement, das aus flexibel gewalztem Bandmaterial mit in Bandlängsrichtung unterschiedlichen Dicken um die Bandlängsrichtung zu einem Rohr- oder Profilkörper mit unrundem Querschnitt und über der Länge variabler Wandstärke umgeformt ist.

Eine zweite Lösung besteht in einem Blechelement, das aus flexibel gewalztem Bandmaterial mit in Bandlängsrichtung unterschiedlichen Dicken quer zur Bandlängsrichtung zu einem Rohr- oder Profilkörper mit unrundem Querschnitt und über dem Umfang variabler Wandstärke umgeformt ist.

Mit den hiermit genannten unrunden Profilquerschnitten können gleichmäßige oder symmetrische Querschnitte, beispielsweise polygonale oder ovale Querschnitte gemeint sein oder auch gänzlich unsymmetrische Querschnitte. Hierbei sind die Alternativen eines längsverschweißten geschlossenen Profils oder eines im Querschnitt offenen Profils eingeschlossen. Die Blechelemente gemäß der ersten Lösung zeigen insbesondere bei Axialbelastung, ein bereichsweise unterschiedliches Verformungsverhalten, während die Blechelemente gemäß der zweiten Lösung insbesondere ein unterschiedliches Verhalten bei Biegung in verschiedenen Ebenen aufweisen können. Beides läßt sich zu Zwecken der Gewichtsersparnis und der vordefinierten Verformung im Fahrzeuglängsträgern bzw. in Seitenträgern (Seitenaufprallschutz) gezielt zum Einsatz bringen.

In besonderer Ausgestaltung ist vorgesehen, daß die Blechelemente in Längsrichtung einen veränderlichen Querschnitt, insbesondere einen sich stetig und ähnlich ändernden Querschnitt haben. Dies kann durch vorheriges Zuschneiden des Bandmaterials, bei dem ein oder zwei keilförmige Elemente weggeschnitten werden oder durch überlappendes Verbinden des Bandmaterials mit zunehmender Überlappung herbeigeführt werden.

Nach einer weiteren Ausgestaltungsform ist vorgesehen, daß die Blechelemente vom gleichförmigen Querschnitt abweichende Längsabschnitte aufweisen. Dies kann durch anschließende Umformung ursprünglich gleichmäßig geformter Profile erfolgen, beispielsweise nach einem Innenhochdruckverformungsverfahren, in welchem einzelne Profilabschnitte radial erweitert werden, oder nach konventionellen Umformverfahren wie Walzen oder Pressen, bei denen einzelne Profilabschnitte im Querschnitt verformt, reduziert oder erweitert werden.

Die Blechelemente können weiterhin in Längsrichtung gekrümmt verlaufen, wobei bevorzugt zunächst gerade Profile hergestellt werden, die anschließend gebogen werden.

Für die genannten Blechelemente gilt, daß sie einen konstanten Innenquerschnitt aufweisen können, wobei Wandstärkenunterschiede nach außen auftragen oder einen konstanten Außenquerschnitt haben können, wobei Wandstärkenunterschiede nach innen auftragen. Beides läßt sich durch entsprechendes flexibles Walzen des Ausgangsmaterials und entsprechende Verformungsschritte erzielen. Wird das Bandmaterial mit symmetrischen Dickenveränderungen zu einer Längsebene erzeugt, so machen sich die Wandstärkenunterschiede am fertigen Blechelement innen und außen bemerkbar.

Für die obengenannten Zwecke der Gewichtsersparnis und des definierten Verformungsverhaltens können besonders große und besonders fließende Dickenunterschiede von besonderem Vorteil sein. Hierzu wird vorgeschlagen, daß zumindest 25 % Wandstärkendifferenz, bezogen auf die Maximaldicke, am flexibel gewalzten Ausgangsmaterial und damit am Blechelement vorliegen soll.

Zur weiteren Steigerung der Gewichtsersparnis ebenso wie der differenzierten Verformungseigenschaften kann es vorteilhaft sein, wenn die Blechelemente mit Stanzlöchern in ihrer Wandfläche versehen sind, wobei diese bevorzugt am flexiblen Bandmaterial vor dem Umformen zum Blechelement hergestellt werden. Andererseits kann es zur Erhöhung der Festigkeit günstig sein, wenn die Wandflächen mit Strukturen, z. B. Eindellungen in gleichmäßiger Rasteranordnung versehen sind, dies kann auch das Eigenschwingungsverhalten der Blechelemente günstig beeinflussen.

Weitere günstige Ausbildungen liegen darin, daß die Blechelemente Endabschnitt mit größerer Wandstärke aufweisen, die ein günstiges axiales Anbinden ermöglichen und/oder daß zumindest einer der Endabschnitte als Steckmuffe im Querschnitt erweitert ist, um Steckverbindungen zwischen gleichartigen Bauteilen herstellen zu können.

Eine weitere Lösung besteht in einem Blechelement mit in einer Richtung variabler Wandstärke, das aus flexibel gewalztem Bandmaterial mit in Bandlängsrichtung unterschiedlichen Dicken in einer Richtung im wesentlichen parallel zur Bandlängsrichtung zu einem gebogenen oder gewellten Flächenelement umgeformt ist, so daß Bereiche gleicher Wandstärke senkrecht zur Richtung von Sicken, Kanten oder Zylinderlinien verlaufen. Wiederum eine andere Lösung besteht in einem Blechelement mit in einer Richtung variabler Wandstärke, das aus flexibel gewalztem Bandmaterial mit in Bandlängsrichtung unterschiedlichen Dicken im wesentlichen senkrecht zur Bandlängsrichtung zu einem gebogenen oder gewellten Flächenelement umgeformt ist, so daß Bereiche gleicher Wandstärke parallel zur Richtung von Sicken, Kanten oder Zylinderlinien verlaufen. Eine letzte Lösung schließlich besteht in einem Blechelement mit in einer Richtung variabler Wandstärke, das aus flexibel gewalztem Bandmaterial mit in Bandlängsrichtung unterschiedlichen Dicken zu einem räumlich verformten Flächenelement umgeformt ist, d. h. daß hierbei in Richtung zweier sich senkrecht schneidender Schnitte von einer Gerade abweichenden Schnittlinien auftreten. Dies schließt auch übereinstimmende Schnittlinien bei rotationssymmetrischen Blechelementen ein. Auch bei den hiermit definierten Blechelementen können die parallel zueinander verlaufenden Bereiche größerer Wandstärke zur Erhöhung der Festigkeit bei gleichzeitiger Gewichtsersparnis durch dazwischenliegende Bereiche geringerer Wandstärke dienen oder es können die Bereiche geringerer Wandstärke im Falle eines Überschreitens der Festigkeitsgrenze als vordefinierte Verformungsbereiche eingesetzt werden. Bei den letztgenannten räumlich verformten Blechelementen kann insbesondere das Eigenschwingungsverhalten bei gleichzeitiger Materialersparnis beeinflußt werden.

In bevorzugter Ausführung können mehrere der vorgenannten Blechelemente entlang von Längskanten zu einem Flächenelement zusammengesetzt sein oder mehrere der genannten Blechelemente entlang mehrerer paralleler Längskanten zu einem Hohlkörper zusammengesetzt sein. Hierbei entstehen offenendige Hohlkörper. Schließlich können mehrere der genannten Blechelemente entlang von Umfangskanten zu einem Hohlkörper zusammengesetzt sein. Hiermit sind an drei oder vier Seiten geschlossene Hohlkörper herzustellen. Auch die genannten Hohlkörper können einen in einer Längsrichtung veränderlichen Querschnitt, insbesondere sich stetig und ähnlich ändernden Querschnitt aufweisen. Ebenso können die Blechelemente in einer Längsrichtung von einem gleichförmigen Querschnitt abweichende Längsabschnitte aufweisen. Schließlich können sie ebenfalls in einer Längsrichtung gekrümmt verlaufen. Auch bei den hier genannten Blechelementen in Form von Hohlkörpern können konstante Innenquerschnitte mit Wandstärkenunterschieden auf der Außenseite und konstante Außenquerschnitte mit Wandstärkenunterschieden auf der Innenseite verwirklicht werden.

Aus dem obengenannten Gründen ist auch hier eine Wandstärkendifferenz von zumindest 25 %, bezogen auf die Maximaldicke, zu bevorzugen. Die Wandflächen können wiederum zu Gewichtsersparnis mit Stanzlöchern versehen sein oder zur Festigkeitserhöhung mit Wandstrukturen, insbesondere Eindellungen in einem gleichmäßigen Raster aufweisen. Auch die hiermit beschriebenen Blechelemente können Endabschnitte größerer Wandstärke zur Verbesserung der Anbindung, insbesondere durch Schweißverbindungen, zeigen. Bei länglichen Blechelementen der genannten Art von geschlossenem Querschnitt kann auch hier einer der Endabschnitte als Steckmuffe im Querschnitt erweitert sein.

Erfindungsgemäße Blechelemente als Profilkörper mit in Längsrichtung veränderlicher Wandstärke können insbesondere als Fahrzeugträger mit in Längsrichtung definiert gestuftem Belastungs- oder Verformungsverhalten in Kraftfahrzeugen zum Einsatz kommen. Hierbei ist eine über der Länge unterschiedliche Biegefestigkeit bei Vorliegen unterschiedlicher Biegebelastungen an den Trägern ebenso sinnvoll, wie eine über der Länge unterschiedliche Druck- oder Knickfestigkeit bei Trägern, die auf Axialkräfte im Crashfall belastet werden. Daneben können Blechelemente mit den genannten Eigenschaften als Pralltopf mit in Längsrichtung definiert gestuftem Verformungsverhalten verwendet werden. Hierbei erfolgt eine Auslegung auf kontrollierte Axialverkürzung im Crashfall.

Erfindungsgemäße Blechelemente als Profilkörper mit in Umfangsrichtung variabler Wandstärke können nach einem weiteren Vorschlag als Fahrzeugträger mit über dem Umfang definiert gestuftem Verformungsverhalten oder Knickverhalten zum Einsatz kommen. Hierbei ist in der Hauptbiegeebene der Träger ein höheres Flächenträgheitsmoment vorzusehen, während in weniger belasteten Biegeebenen zur Materialersparnis ein geringeres Flächenträgheitsmoment vorliegen kann.

Ohne einschränkenden Charakter werden folgende Anwendungsfälle von erfindungsgemäßen Profilen in Fahrzeugen genannt: Längsträger (vorne, hinten), Stoßfänger (vorne, hinten), Achsquerträger, Sitzquerträger, Schweller, Tunnelverstärkungsprofile, A-, B-, C-Säulen, Dachrahmen, Dachquerträger.

Erfindungsgemäße flächige Blechelemente können als Karosserieaußenbleche eingesetzt werden, wobei Stege mit größerer Wandstärke die Funktion von Sicken oder Falzen im Blech im Hinblick auf eine Steigerung der Formstabilität übernehmen können. Hierbei kann sogar eine gezielte Strukturversteifung für den Fall eines Seitencrashs herbeigeführt werden.

Eine weitere bevorzugte Verwendung von flächigen Blechelementen liegt in einem Fahrzeugbodenblech einschließlich des Tunnels, das aus verschiedenen Blechelementen zusammengesetzt sein kann, die durch Verwendung von flexibel gewalztem Material bezüglich ihrer Festigkeit und ihres Gewichts optimiert werden kann. Auch hiermit kann die Strukturfestigkeit für verschiedene Crashfälle bei reduziertem Materialeinsatz verbessert werden.

Bevorzugte Ausführungsbeispiele der Erfindung sind in den Zeichnungen dargestellt und werden nachstehend beschrieben.
- Figur 1: zeigt ein offenes Kastenprofil mit über der Länge variabler Wandstärke;
- Figur 2: zeigt ein offenes Halbrundprofil mit der über der Länge variabler Wandstärke;
- Figur 3: zeigt ein geschlossenes Kastenprofil mit über dem Umfang variabler Wandstärke;
- Figur 4: zeigt ein geschlossenes Ovalprofil mit über dem Umfang variabler Wandstärke;
- Figur 5: zeigt ein geschlossenes Ovalprofil mit über der Länge variabler Wandstärke;
- Figur 6: zeigt ein Ovalprofil mit über der Länge variabler Wandstärke mit seitlichen Abflachungen;
- Figur 7: zeigt ein geschlossenes Kastenprofil mit über der Länge variabler Wandstärke;
- Figur 8: zeigt ein U-Profil mit über der Länge variabler Wandstärke, das abschließend gebogen ist;
- Figur 9: zeigt ein Blechelement mit variabler Wandstärke, das parallel zur Bandlängsrichtung umgeformt ist;
- Figur 10: zeigt ein Blechelement mit variabler Wandstärke, das quer zur Bandlängsrichtung umgeformt ist;
- Figur 11: zeigt ein Blechelement, das parallel zur Bandlängsrichtung umgeformt ist und
- Figur 12: zeigt ein Beispiel für die Verwendung eines Blechelementes nach Figur 11.

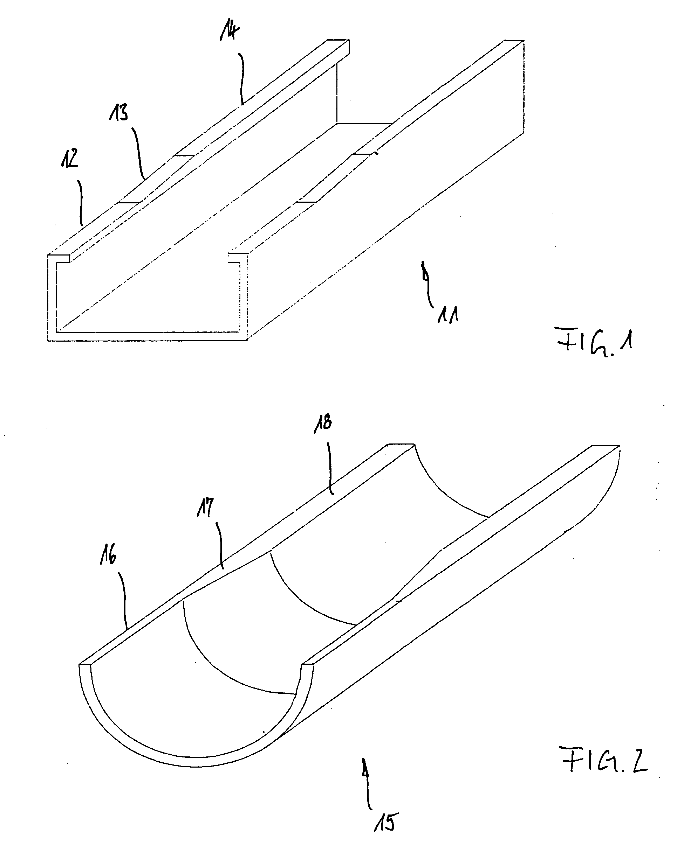

In Figur 1 ist ein offenes U-förmiges bzw. kastenförmiges Profil 11 gezeigt, das in Längsrichtung variable Wandstärke hat. Hierbei ist ein erster Längsschnitt 12 mit geringerer konstanter Wandstärke, ein Übergangsabschnitt 13 mit zunehmender Wandstärke und ein zweiter Längsabschnitt 14 mit konstanter größerer Wandstärke erkennbar. Das Profil hat in Längsrichtung einen konstanten freien Innenquerschnitt.

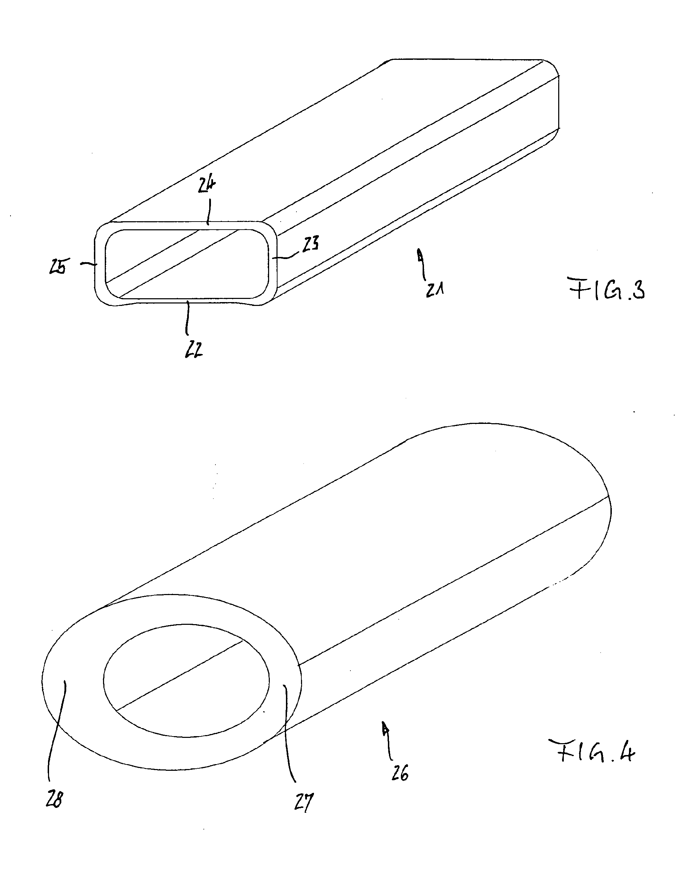

In Figur 2 ist ein offenes Profil 15 mit Halbrundquerschnitt gezeigt, das über der Länge variable Wandstärke aufweist. Hierbei ist ein erster Längsabschnitt 16 mit geringerer konstanter Wandstärke, ein Übergangsabschnitt 17 und ein zweiter Längsabschnitt 18 mit größerer konstanter Wandstärke erkennbar. Das Profil hat einen sich in Längsrichtung verändernden freien Innenquerschnitt.

In Figur 3 ist ein geschlossenes etwa rechteckiges Kastenprofil 21 gezeigt, das in Längsrichtung im wesentlichen konstanten Querschnitt und im Querschnitt eine längere Seitenwand 22 mit minimaler Wanddicke hat, zwei Seitenwände 23, 24 mit einer demgegenüber größeren Wandstärke und eine Seitenwand 25 mit maximaler Wandstärke aufweist.

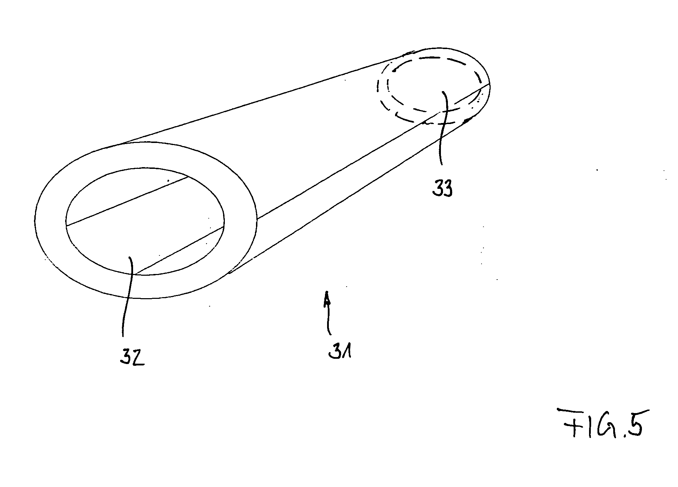

In Figur 4 ist ein geschlossenes Oval-Profil 26 mit über der Länge konstantem Querschnitt gezeigt, bei dem die Wandstärke von einem Umfangsbereich 27 mit geringster Wandstärke zu einem Umfangsbereich 28 mit maximaler Wandstärke jeweils stetig übergeht.

In Figur 5 ist ein geschlossenes Oval-Profil bzw. Rohr 31 gezeigt, das bei über dem Umfang konstanter Wandstärke über der Länge von einer größeren Endöffnung 32 zu einer kleineren Endöffnung 33 abnehmende Wandstärke aufweist. Hierbei verringert sich zugleich der freie Öffnungsquerschnitt des Rohres.

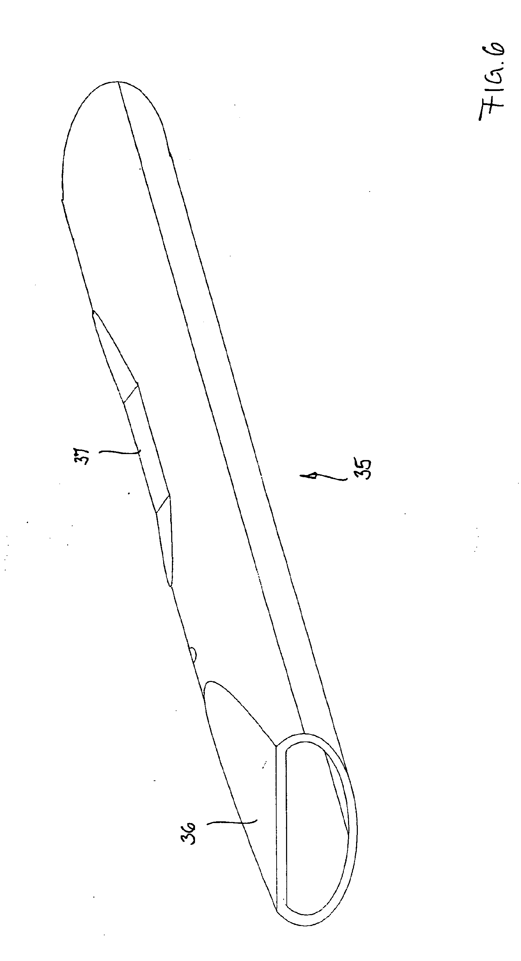

In Figur 6 ist ein Oval-Profil 35 mit im Grundsatz gleichbleibendem Querschnitt und (nicht dargestellt) über der Länge veränderlicher Wandstärke gezeigt. Zusätzlich weist dieses Profil an einem Ende eine erste seitliche Abflachung 36 und weiterhin eine im mittleren Längenbereich liegende seitliche Abflachung 37 auf.

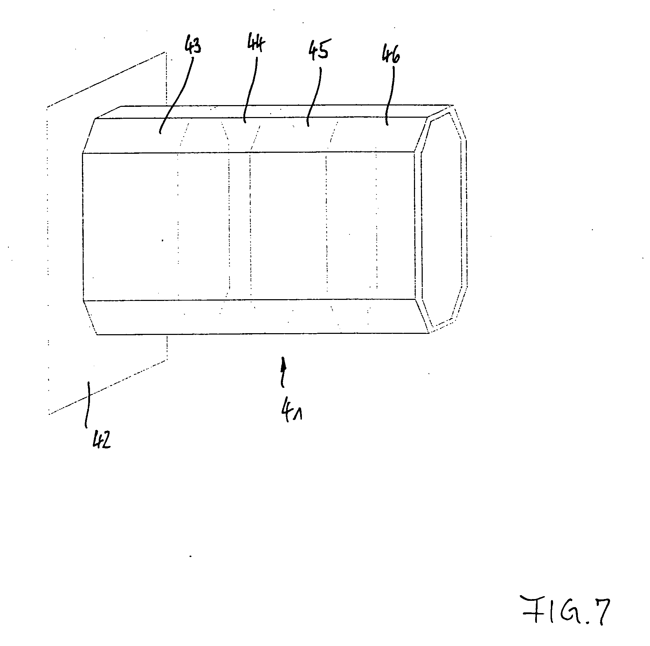

In Figur 7 ist ein Vielkantprofil oder -rohr 41 gezeigt, das an eine Stirnwand 42 angesetzt ist. Das Rohr hat gleichbleibenden Querschnitt und über dem Umfang gleichbleibende Wandstärke, dabei jedoch einen ersten Längsabschnitt 43 größerer Wandstärke, einen Übergangsabschnitt 44 abnehmender Wandstärke, einen zweiten Längsabschnitt 45 reduzierter Wandstärke und einen Endabschnitt 46 abnehmender Wandstärke. Diese genannte Struktur ist nur beispielhaft. Andere Verläufe der Wand-Dickenänderung sind möglich.

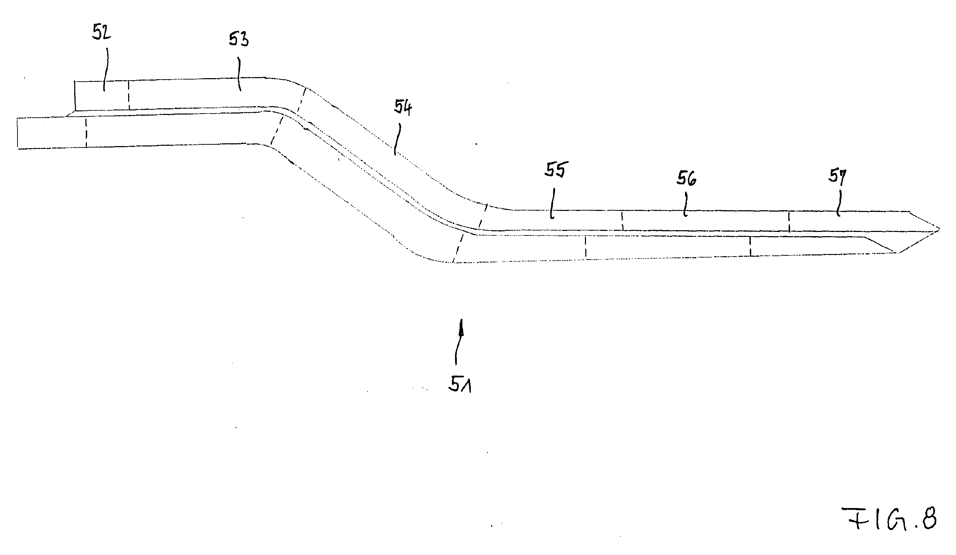

In Figur 8 ist ein offenes U-förmiges Profil gezeigt, das zudem eine Verkröpfung aufweist. Hierbei sind drei erste Längsabschnitte 52, 53, 54 mit jeweils zunehmender Wandstärke ausgebildet, während ausgehend vom Abschnitt 54 drei weitere Längsabschnitte 55, 56, 57 folgen, die jeweils gegenüber diesem und untereinander abnehmende Wandstärke haben. Übergangsbereiche sind hierbei nicht im einzelnen bezeichnet. Ungeachtet dessen sind die Wandstärkenänderungen als jeweils stetig anzunehmen.

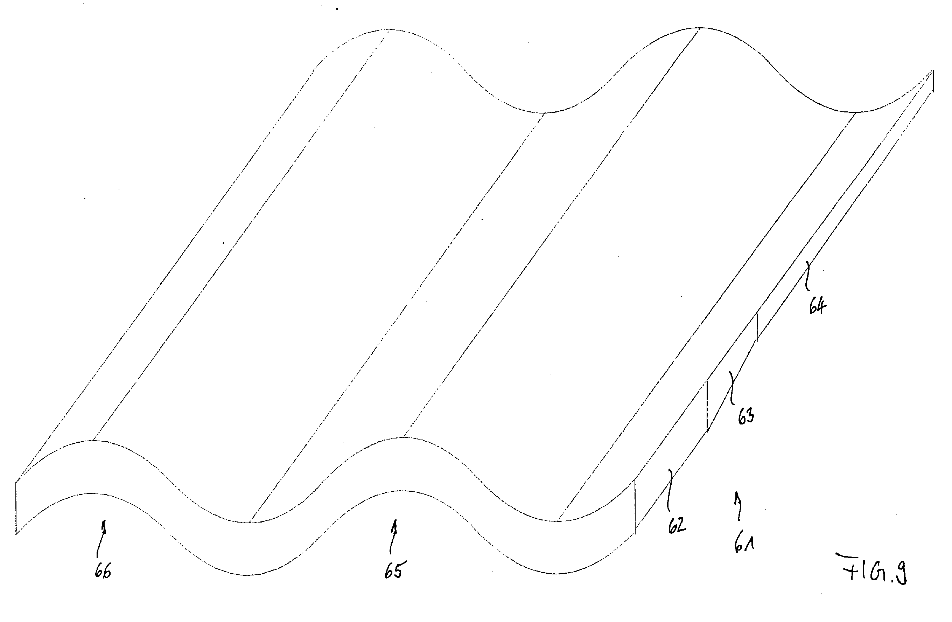

In Figur 9 ist ein Blechelement 61 gezeigt, das einen Längsabschnitt 62 größerer Wandstärke, einen Übergangsabschnitt 63 und einen Längsabschnitt 64 geringerer Wandstärke aufweist. Parallel zur Längsrichtung bzw. Walzrichtung mit veränderlicher Wandstärke laufen Wellungen 65, 66 im Blechmaterial.

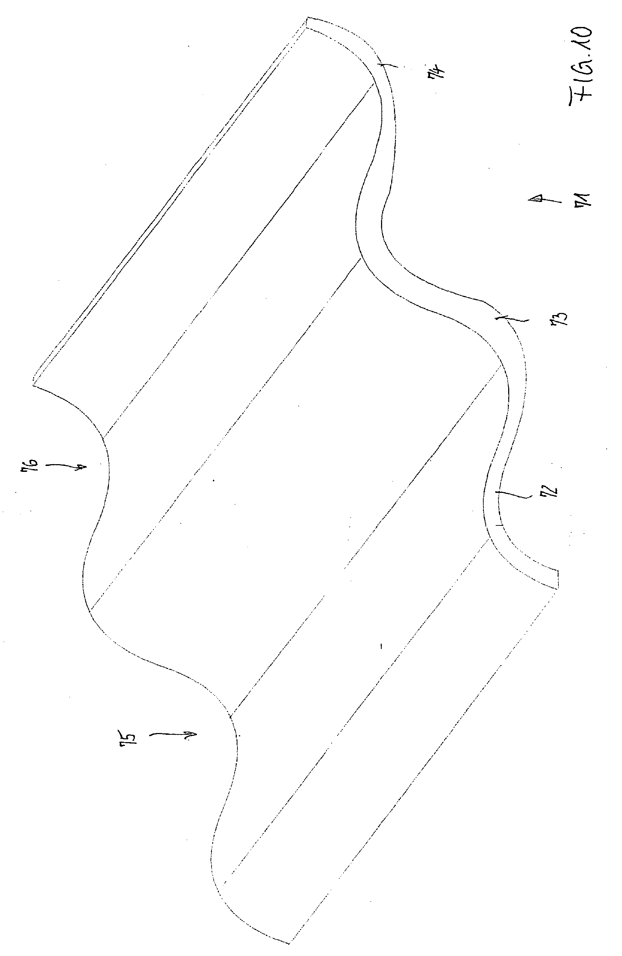

In Figur 10 ist ein Blechelement 71 gezeigt, das in Längsrichtung bzw. Walzrichtung einen Abschnitt 72 geringerer Wandstärke, einen Abschnitt 73 größerer Wandstärke und einen Abschnitt 74 geringerer Wandstärke erkennen läßt. Übergangsabschnitte sind stetig, aber nicht im einzelnen bezeichnet. Quer zur Längsrichtung weist das Blechelement Wellungen 75, 76 auf.

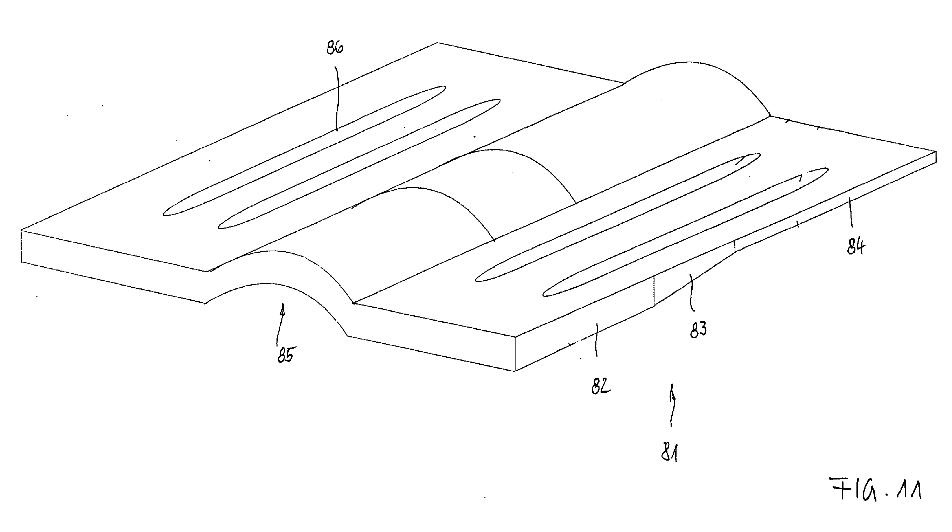

In Figur 11 ist ein Blechelement 81 gezeigt, das in Längs- oder Walzrichtung einen ersten Abschnitt 82 größerer Wandstärke, einen Übergangsabschnitt 83 sowie einen weiteren Abschnitt 84 geringerer Wandstärke aufweist. Es ist eine Profilierung 85 parallel zur Längsrichtung verlaufend sowie eine Mehrzahl von eingeprägten, in Längsrichtung verlaufenden einzelnen Sicken 86 erkennbar.

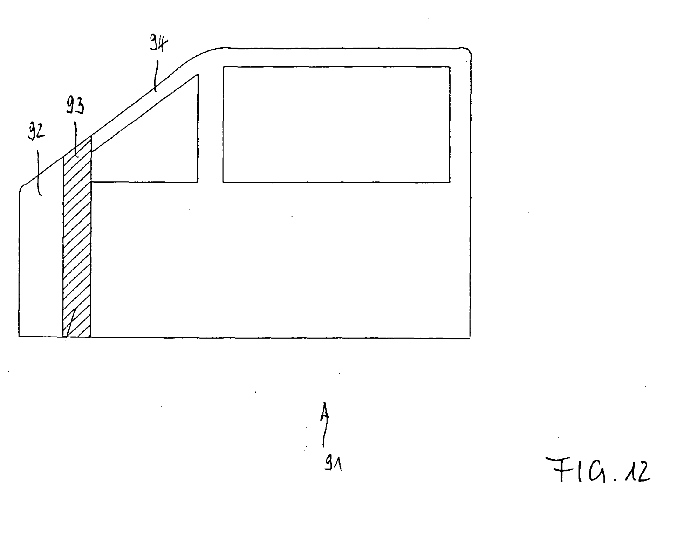

In Figur 12 ist die Verwendung eines Blechelements nach Figur 11 beispielhaft gezeigt. Ein Blech für eine Fahrzeugtür 91 weist einen ersten Längsbereich 92 geringerer Wandstärke, einen Übergangsbereich 93 und einen weiteren Längsbereich 94 größerer Wandstärke auf.

## Patentansprüche

1. Blechelement, das aus flexibel gewalztem Bandmaterial mit in Bandlängsrichtung unterschiedlichen Dicken um die Bandlängsrichtung zu einem Rohr- oder Profilkörper mit unrundem Querschnitt und über der Länge variabler Wandstärke umgeformt ist.

2. Blechelement, das aus flexibel gewalztem Bandmaterial mit in Bandlängsrichtung unterschiedlichen Dicken quer zur Bandlängsrichtung zu einem Rohroder Profilkörper mit unrundem Querschnitt und über dem Umfang variabler Wandstärke umgeformt ist.

3. Element nach einem der Ansprüche 1 oder 2,
**dadurch gekennzeichnet,**
**daß** es im Querschnitt geschlossen und in Längsrichtung verschweißt ist.

4. Element nach einem der Ansprüche 1 oder 2,
**dadurch gekennzeichnet,**
**daß** es im Querschnitt offen ist.

5. Element nach einem der Ansprüche 1 bis 4,
**dadurch gekennzeichnet,**
**daß** es in Längsrichtung einen veränderlichen Querschnitt, insbesondere einen sich stetig und ähnlich ändernden Querschnitt hat.

6. Element nach einem der Ansprüche 1 bis 4,
**dadurch gekennzeichnet,**
**daß** es vom gleichförmigen Querschnitt abweichende Längsabschnitte aufweist.

7. Element nach einem der Ansprüche 1 bis 6,
**dadurch gekennzeichnet,**
**daß** es in Längsrichtung gekrümmt verläuft.

8. Element nach einem der Ansprüche 1 bis 7,
**dadurch gekennzeichnet,**
**daß** es einen konstanten Innenquerschnitt aufweist und Wandstärkenunterschiede nach außen auftragen.

9. Element nach einem der Ansprüche 1 bis 7,
**dadurch gekennzeichnet,**
**daß** es einen konstanten Außenquerschnitt hat und Wandstärkenunterschiede nach innen auftragen.

10. Element nach einem der Ansprüche 1 bis 9,
**dadurch gekennzeichnet,**
**daß** zumindest 25 % Wandstärkendifferenz bezogen auf die Maximaldicke vorliegt.

11. Element nach einem der Ansprüche 1 bis 10,
**dadurch gekennzeichnet,**
**daß** es mit Eindellungen, insbesondere in gleichmäßiger Rasteranordnung versehen ist.

12. Element nach einem der Ansprüche 1 bis 10,
**dadurch gekennzeichnet,**
**daß** es mit Stanzlöchern in seiner Oberfläche versehen ist.

13. Element nach einem der Ansprüche 1 bis 12,
daß es Endabschnitte mit größerer Wandstärke aufweist.

14. Element nach Anspruch 13,
**dadurch gekennzeichnet,**
**daß** zumindest einer der Endabschnitte als Steckmuffe im Querschnitt erweitert ist.

15. Blechelement mit in einer Richtung variabler Wandstärke, das aus flexibel gewalztem Bandmaterial mit in Bandlängsrichtung unterschiedlichen Dicken in einer Richtung im wesentlichen parallel zur Bandlängsrichtung zu einem gewellten Flächenelement umgeformt ist, so daß Bereiche gleicher Wandstärke senkrecht zur Richtung von Sicken, Kanten oder Zylinderlinien verlaufen.

16. Blechelement mit in einer Richtung variabler Wandstärke, das aus flexibel gewalztem Bandmaterial mit in Bandlängsrichtung unterschiedlichen Dicken im wesentlichen senkrecht zur Bandlängsrichtung zu einem gewellten Flächenelement umgeformt ist, so daß Bereiche gleicher Wandstärke parallel zur Richtung von Sicken, Kanten oder Zylinderlinien verlaufen.

17. Blechelement mit in einer Richtung variabler Wandstärke, das aus flexibel gewalztem Bandmaterial mit in Bandlängsrichtung unterschiedlichen Dicken zu einem räumlich verformten Flächenelement umgeformt ist.

18. Blechelement, das aus mehreren Blechelementen nach einem der Ansprüche 15 bis 17 entlang von Längskanten zu einem Flächenelement zusammengesetzt ist.

19. Blechelement, das aus mehreren Blechelementen nach einem der Ansprüche 15 bis 17 entlang von Längskanten zu einem Hohlkörper zusammengesetzt ist.

20. Blechelement, das aus mehreren Blechelementen nach einem der Ansprüche 15 bis 17 entlang von Umfangskanten zu einem Hohlkörper zusammengesetzt ist.

21. Element nach Anspruch 19,
**dadurch gekennzeichnet,**
**daß** es an zwei Enden offen ist.

22. Element nach einem der Ansprüche 19 oder 20,
**dadurch gekennzeichnet,**
**daß** es in einer Längsrichtung einen veränderlichen Querschnitt, insbesondere einen sich stetig und ähnlich ändernden Querschnitt hat.

23. Element nach einem der Ansprüche 19 oder 20,
**dadurch gekennzeichnet,**
**daß** es in einer Längsrichtung von einem gleichförmigen Querschnitt abweichende Längsabschnitte aufweist.

24. Element nach einem der Ansprüche 15 bis 23
**dadurch gekennzeichnet,**
**daß** es in einer Längsrichtung gekrümmt verläuft.

25. Element nach einem der Ansprüche 15 bis 24,
**dadurch gekennzeichnet,**
**daß** es einen konstanten Innenquerschnitt aufweist und Wandstärkenunterschiede nach außen auftragen.

26. Element nach einem der Ansprüche 15 bis 24,
**dadurch gekennzeichnet,**
**daß** es einen konstanten Außenquerschnitt hat und Wandstärkenunterschiede nach innen auftragen.

27. Element nach einem der Ansprüche 15 bis 26,
**dadurch gekennzeichnet,**
**daß** zumindest 25 % Wandstärkendifferenz bezogen auf die Maximaldicke vorliegt.

28. Element nach einem der Ansprüche 15 bis 27,
**dadurch gekennzeichnet,**
**daß** es mit Eindellungen, insbesondere in gleichmäßiger Rasteranordnung versehen ist.

29. Element nach einem der Ansprüche 15 bis 28,
**dadurch gekennzeichnet,**
**daß** es mit Stanzlöchern in seiner Oberfläche versehen ist.

30. Element nach einem der Ansprüche 15 bis 20,
daß es Endabschnitte mit größerer Wandstärke aufweist.

31. Element nach Anspruch 30,
**dadurch gekennzeichnet,**
**daß** zumindest einer der Endabschnitte als Steckmuffe im Querschnitt erweitert ist.

32. Verwendung eines Blechelements nach einem der Ansprüche 1 und 3 bis 14 als Fahrzeugträger mit in Längsrichtung definiert gestuftem Belastungs- oder Verformungsverhalten.

33. Verwendung eines Blechelements nach einem der Ansprüche 1 und 3 bis 14 als Pralltopf mit in Längsrichtung definiert gestuftem Verformungsverhalten.

34. Verwendung eines Blechelements nach einem der Ansprüche 2 bis 14 als Fahrzeugträger mit über dem Umfang definiert gestuftem Verformungsverhalten.

35. Verwendung eines Blechelements nach einem der Ansprüche 15 bis 31 als Fahrzeugbodenblech.

36. Verwendung eines Blechelements nach einem der Ansprüche 15 bis 31 als Fahrzeugaußenblech.
